# FASCICULE DE BREVET EUROPEEN

(11) **EP 0 516 739 B1**
(45) Date de publication et mention de la délivrance du brevet: **03.05.1995**
(21) Numéro de dépôt: 91905549.1
(22) Date de dépôt: 22.02.1991
(51) Int. Cl.: G08G 1/127

(54) **SYSTEME DE COMMUNICATION ENTRE PIETONS ET VEHICULES**
ÜBERTRAGUNGSSYSTEM ZWISCHEN FUSSGÄNGERN UND FAHRZEUGEN
VEHICLE-PEDESTRIAN COMMUNICATION SYSTEM

(30) Priorité: 23.02.1990 FR 9002264
(43) Date de publication de la demande: 09.12.1992
(73) Titulaire: FINANCE TECHNIQUES ET SYSTEMES, F-78350 Jouy-en-Josas (FR)
(72) Inventeur: GRASSET, Michel, Charles, Fernand, F-75007 Paris (FR)
(74) Mandataire: Martin, Jean-Jacques
(86) Numéro de dépôt international: FR9100145
(87) Numéro de publication internationale: WO9113420

(56) Documents cités:
- EP-A- 0 296 905
- EP-A- 0 323 326
- WO-A-83/01698
- US-A- 4 350 969
- US-A- 4 651 156

## Description

La présente invention concerne le domaine du transport des personnes.

Le document US-A-4350969 décrit un système permettant à des usagers de localiser avec précision des véhicules se déplaçant sur un trajet prédéterminé. A cette fin, chaque véhicule est équipé d'un radio-émetteur. Le radio-émetteur de chaque véhicule génère des informations d'identification de véhicules. Le radio-émetteur de chaque véhicule génère également des informations de localisation du véhicule sur le trajet concerné. Ces informations de localisation sont, soient pilotées par le conducteur du véhicule, soient générées automatiquement par un audomètre. Par ailleurs, les usagers disposent de récepteurs sensibles aux signaux issus des radio-émetteurs de véhicules, lesquels récepteurs délivrent les informations de localisation de véhicules sous forme visible ou audible.

La présente invention a pour but de proposer de nouveaux moyens permettant de mettre en relation d'une part des piétons désirant se rendre en un lieu donné, d'autre part des véhicules susceptibles d'accueillir ces piétons pour les transporter au lieu donné.

Ce but est atteint selon la présente invention grâce à un système comprenant :
- des moyens émetteurs/récepteurs portatifs, portés par les piétons, conçus pour générer des signaux de demande codés dont le code est représentatif de données liées aux trajets souhaités par les piétons et comprenant d'une part l'identification de la destination souhaitée par les piétons et d'autre part l'identification de la localisation des piétons émettant les signaux de demandes, et détecter automatiquement un signal d'offre éventuelle de prise en charge émanant d'un véhicule, et
- des moyens émetteurs/récepteurs embarqués sur véhicules, conçus pour détecter les signaux de demande générés par des moyens émetteurs/récepteurs portatifs dont le code coïncide avec un code spécifique lié au trajet de chaque véhicule, et générer un signal d'offre de prise en charge en cas de coïncidence entre un code reçu en provenance d'un moyen émetteur/récepteur portatif et ledit code spécifique lié au trajet du véhicule.

Selon une autre caractéristique de l'invention desdites données liées aux trajets souhaités par les piétons comprennent la définition du parcours souhaité.

Selon une autre caractéristique de l'invention lesdites données liées aux trajets souhaités par les piétons comprennent l'identification de la direction souhaitée.

Selon une autre caractéristique de l'invention, les moyens émetteurs/récepteurs portatifs et les moyens émetteurs/récepteurs embarqués sont conçus pour permettre un dialogue entre les piétons émettant les signaux de demande et les conducteurs des véhicules émettant les signaux d'offre.

Selon une autre caractéristique de l'invention, le système comprend des moyens d'identification des piétons.

Selon une autre caractéristique de l'invention, le système comprend des moyens d'identification des véhicules et/ou de leurs conducteurs.

Selon une autre caractéristique de l'invention, le système comprend des moyens de paiement électronique.

Selon une autre caractéristique de l'invention, les moyens de paiement électronique comprennent un support à mémoire détenu par les piétons, et un moyen de lecture du support à mémoire, embarqué sur les véhicules.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique, sous forme de blocs fonctionnels, d'un moyen émetteur/récepteur portatif conforme à la présente invention,
- la figure 2 représente une vue schématique, sous forme de blocs fonctionnels, d'un support à mémoire pour le paiement électronique conforme à la présente invention,
- la figure 3 représente une vue schématique, sous forme de blocs fonctionnels, d'un moyen émetteur/récepteur embarqué sur véhicules, conforme à la présente invention,
- la figure 4 représente une vue schématique de l'ensemble des moyens portatifs mis à la disposition des piétons selon un mode de réalisation préférentiel de l'invention,
- la figure 5 représente une vue schématique d'un livret géographique utilisé dans le cadre de cet exemple préférentiel de réalisation,
- la figure 6 représente schématiquement l'ensemble des moyens embarqués sur véhicules dans le cadre du même ensemble de réalisation préférentiel de la présente invention,
- la figure 7 illustre les modalités d'identification de la localisation du piéton émettant le signal de demande, et
- les figures 8 à 15 représentent des organigrammes de fonctionnement du système.

Dans la suite de la description, on appellera FOCUS 1 les moyens portatifs mis à la disposition des piétons, tandis qu'on appellera FOCUS 2 les moyens embarqués sur véhicules.

Comme indiqué précédemment, les deux fonctions de bases des moyens émetteurs/récepteurs portatifs FOCUS 1 portés par les piétons sont de générer des signaux de demande représentatifs de données liées aux trajets souhaités par les piétons et de détecter un signal d'offre éventuelle de prise en charge émanant des moyens émetteurs/récepteurs FOCUS 2 embarqués sur véhicules.

Les fonctions de base des moyens émetteurs/récepteurs FOCUS 2 embarqués sur véhicules sont symétriquement de détecter les signaux de demande générée par des moyens émetteurs/récepteurs portatifs FOCUS 1 et de générer un signal d'offre de prise en charge.

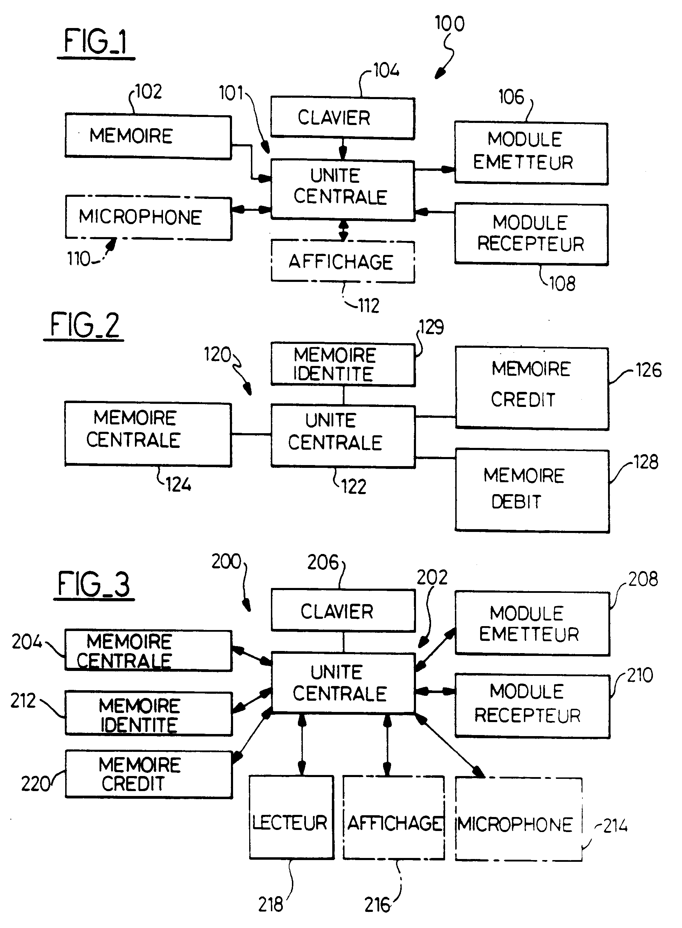

Les moyens émetteurs/récepteurs portatifs 100 représentés sur la figure 1 comprennent pour l'essentiel une unité centrale 101 associée à une mémoire 102, un clavier 104, un module émetteur 106 et un module récepteur 108.

Le cas échéant, les moyens émetteurs/récepteurs portatifs 100 peuvent comprendre en outre un microphone 110 et des moyens d'affichage 112.

La fonction de ces différents éléments sera décrite plus en détail par la suite.

Selon une caractéristique préférentielle de l'invention, le système FOCUS 1 mis à la disposition des piétons comprend des moyens de paiement électronique qui comportent un support à mémoire 120 conçu pour être débité par des moyens adaptés prévus au niveau de FOCUS 2. Pour l'essentiel, comme représenté sur la figure 2, le support à mémoire 120 utilisé pour le paiement électronique comprend une unité centrale 122 associée à une mémoire centrale de gestion 124, à une mémoire 126 de crédit et à une mémoire 128 de débit. Le cas échéant le support à mémoire 122 comprend également une mémoire 129 contenant des informations d'identification du piéton.

La fonction de ces différents éléments sera décrire plus en détail par la suite.

Pour l'essentiel, les moyens émetteurs/récepteurs 200 du système FOCUS 2 embarqués sur véhicules, comprennent comme représentés sur la figure 3, une unité centrale 202 associée à une mémoire centrale de gestion 204, à un clavier 206, à un module émetteur 208, et à un module récepteur 210.

Le cas échéant, les moyens émetteurs/récepteurs 200 comprennent en outre une mémoire 212 contenant des informations d'identification du véhicule et/ou du conducteur de véhicule, un microphone 214, des moyens d'affichage 216, un moyen 218 conçu pour lire le support à mémoire 120 du système FOCUS 1, en vue d'un paiement électronique et une mémoire de crédit 220.

La fonction de ces différents éléments sera décrite plus en détail par la suite.

Comme indiqué précédemment, l'une des fonctions des moyens émetteurs/récepteurs portatifs 100 est de générer un signal de demande représentatif de données liées aux trajets souhaités par les piétons.

Ces données liées aux trajets souhaités par les piétons comprennent les données suivantes : identification de la destination souhaitée et de la localisation des piétons émettant les signaux de demande ainsi que de préférence la définition du parcours souhaité et l'identification de la direction souhaitée.

Ces signaux sont générés par le module émetteur 106, de préférence sous forme d'une onde électromagnétique.

Plus précisément encore, les données liées aux trajets souhaités par les piétons sont codés. Dans le cadre de l'invention, il est proposé de coder ces données à l'aide d'un livret géographique. Ces dispositions seront décrites par la suite.

Les données émises par le système FOCUS 1 peuvent être introduites dans les moyens émetteurs/récepteurs 100 grâce au clavier 104.

Les signaux de demande ainsi générés par l'ensemble des systèmes FOCUS 1 sont reçus sur les modules récepteurs 210 des systèmes FOCUS 2. En cas d'accord entre les données liées au trajet souhaité par un piéton représenté par un signal de demande reçue, et le trajet suivi par un véhicule, le conducteur de ce dernier peut commander l'émission, par l'intermédiaire du module émetteur 208, d'un signal d'offre de prise en charge. Ce signal d'offre de prise en charge peut être initié par action sur le clavier 206.

Le module récepteur 108 du système FOCUS 1 reçoit alors le signal d'offre en retour. La phase suivante du processus vise à définir les modalités précises de prise en charge du piéton par le véhicule, en particulier quant à la localisation de la prise en charge.

Cette phase est de préférence réalisée sous forme d'un dialogue direct entre le piéton et le conducteur du véhicule par l'intermédiaire des microphones 110, 214 et des modules émetteur 106, 208 et récepteurs 108, 210.

On peut également envisager que cette phase de définition des modalités précises de prise en charge soit réalisée non pas sous forme de dialogue direct mais sous forme d'échange de données codées quant à la localisation de la prise en charge du piéton par le véhicule et éventuellement quant à l'identité du piéton ainsi que du conducteur de véhicule et/ou du véhicule.

Ces différents échanges peuvent le cas échéant être facilités par la visualisation des données géographiques et/ou des identités échangées sur les moyens d'affichage 112 et 216.

De préférence, lorsque le véhicule a rejoint le piéton, le processus se poursuit par une étape d'échange et contrôle des identités respectives. Pour cela, de préférence, les identités respectives du piéton ainsi que du conducteur et/ou du véhicule sont mémorisées sur des supports à mémoire, tels que des cartes à mémoire. Les informations ainsi échangées quant à l'identité peuvent être confrontées à un fichier pour renforcer la sécurité et des piétons et des conducteurs de véhicules.

Il est également prévu de préférence une mémorisation sur les supports à mémoire détenus par les piétons d'une part, et les conducteurs de véhicules d'autre part, des identités communiquées par l'autre partie à savoir les conducteurs de véhicules et les piétons respectivement.

Les mêmes supports à mémoire peuvent être utilisés pour le paiement par le piéton. De préférence, ce paiement est proportionnel à la distance parcourue.

Selon un mode de réalisation particulier mais non limitatif, le système FOCUS 1 portatif utilisé par les piétons comprend trois éléments : un émetteur/récepteur 100 tel que schématisé sur la figure 1, un support à mémoire 120 tel que représenté sur la figure 2, formé de préférence d'une carte à microcalculateur et un livret géographique 130 comportant des cartes géographiques avec des codes relatifs aux morcellements de celles-ci, afin de faciliter le codage des données liées aux trajets souhaités par les piétons.

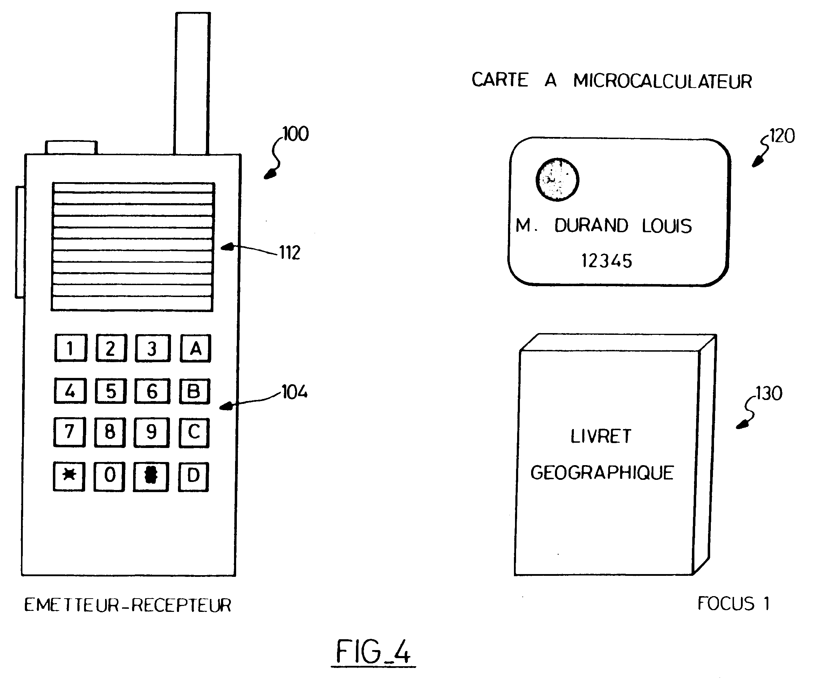

Ces trois éléments sont représentés schématiquement sur la figure 4. A titre d'exemple non limitatif, I'émetteur/récepteur 100 peut être du type IC-»4A/AT/E commercialisé par la Société ICOM. Cet émetteur/récepteur 100 travaille en modulation de fréquence par exemple sur la gamme 430/440MHz.

Le support à mémoire 120 peut être formé d'une carte à microcalculateur telle que la carte proposée sous la référence CP8 par la Société BULL.

Le système FOCUS 2 embarqué sur véhicules comprend de préférence quatre éléments : un émetteur/récepteur 200, un livret géographique 230 similaire au livret géographique 130 précité, un support à mémoire 232 qui peut être de strcuture identique au support à mémoire 120 précité et un lecteur 234 conçu pour permettre la lecture et l'écriture des supports à mémoire 120 et 232.

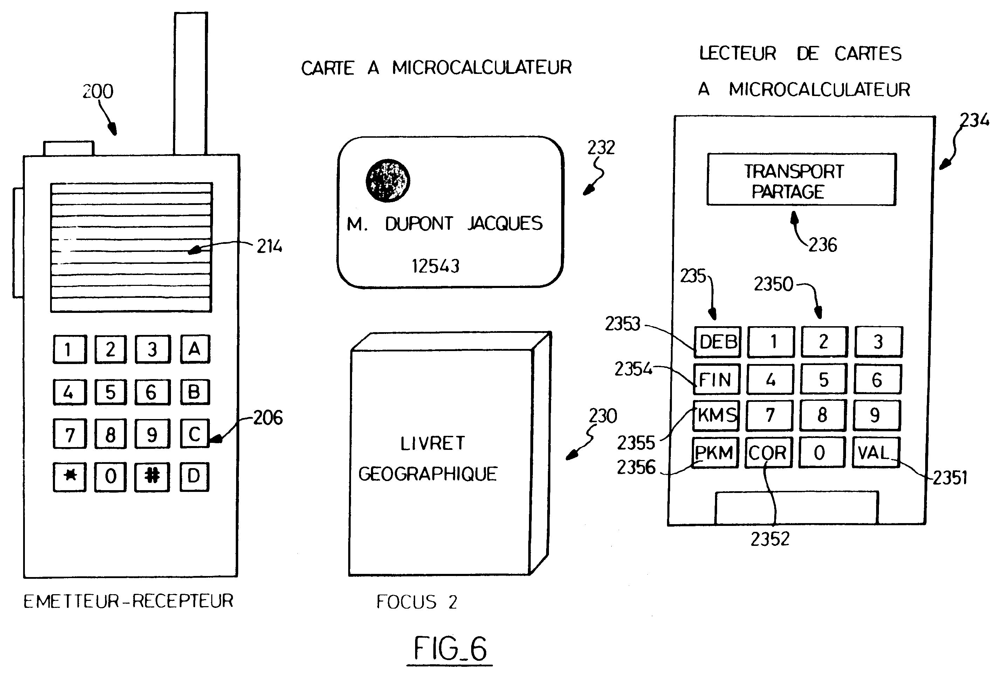

Ces quatre éléments sont représentés schématiquement sur la figure 6.

A titre d'exemple non limitatif, l'émetteur/récepteur 200 peut là encore être formé de l'appareil commercialisé par la Société ICOM sous la référence IC-»4A/AT/E. Le support à mémoire 232 peut être formé d'une carte à microcalculateur commercialisée par la Société BULL sous la référence CP8. Enfin, à titre d'exemple également non limitatif, le lecteur 234 peut être formé d'un lecteur commercialisé par la Société BULL sous la référence CAD.

La portée des moyens émetteurs/récepteurs 100, 200 est de préférence réglable. A titre d'exemple la portée des moyens émetteurs/récepteurs 100 et 200 peut être réglée entre quelques centaines de mètres et plusieurs kilomètres. Cette caractéristique est en particulier offerte par les émetteurs/récepteurs ICOM IC-»A/AT/E précités.

La portée des émetteurs/récepteurs est définie en fonction de la concentration de véhicules sur le lieu considéré.

Pour une agglomération à grande concentration de véhicules il faut diminuer la portée de l'émetteur/récepteur à 1km par exemple. Pour une agglomération à faible concentration de véhicules, il est au contraire souhaitable d'augmenter la portée de l'émetteur/récepteur. Un plus grand nombre de transporteurs peut ainsi recevoir la demande de parcours partagé émise par le piéton.

Comme indiqué précédemment les cartes 120 et 232 permettent d'échanger et de contrôler les identités des piétons, des conducteurs de véhicules et des véhicules et d'effectuer toutes les opérations de paiement. Selon un mode de réalisation particulier, la carte comporte sur son recto l'identité de son propriétaire à savoir son nom, et son prénom, ainsi qu'un numéro de code. De plus, la carte comporte dans une zone sécuritaire l'identité du propriétaire de la carte. Dans le cas d'une carte détenue par un conducteur de véhicule, la carte 232 contient en outre des informations relatives à l'identité du véhicule, par exemple le numéro de la carte grise de celui-ci.

Les cartes 120, 232 contiennent de préférence un fichier de sécurité comportant la liste des cartes volées. Dans ce cas, pour des mesures de sécurité, les propriétaires de carte doivent se rendre periodiquement dans un bureau centralisateur pour une mise à jour de ce fichier. Cela implique également que tout possesseur d'une carte de transport doit, en cas de vol, en rendre compte le plus tôt auprès d'un bureau centralisateur.

Les cartes 120, 232 comportent en outre un fichier compte comportant deux sous-fichiers : un fichier crédit et un fichier débit.

Le fichier crédit 126 contient le crédit actualisé et, pour chaque opération de crédit, les renseignements principaux, par exemple l'identité du piéton débité.

Le fichier débit 128 contient le débit actualisé et, pour chaque opération de débit, les renseignements principaux, par exemple le numéro d'identification, tel que le numéro de carte grise, du véhicule crédité.

Le livret géographique 130 et 230 comporte les cartes géographiques réparties par région et grandes agglomérations. Par exemple, la ville de Paris peut être morcelée en vingt parties correspondant aux vingt arrondissements de la ville.

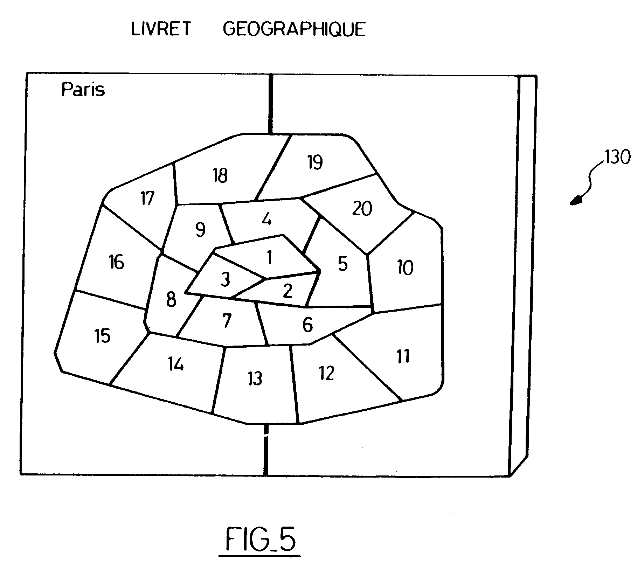

Une telle carte est représentée schématiquement sur la figure 5.

Le lecteur 234, tel que le lecteur CAD de la Société BULL permet la lecture et l'écriture des cartes à microcalculateurs 120, 232. Le lecteur 234 est de préférence portable, autonome et intelligent avec capacité de communication et moyens de saisie et de visualisation intégrés.

Le moyen de saisie 235 du lecteur 234 comporte par exemple seize touches : un bloc numérique 2350 de dix touches, une touche de validation 2351, une touche de correction 2352 et quatre touches de fonction : une touche de début d'utilisation du lecteur 2353, une touche de fin d'utilisation 2354, une touche de saisie du kilométrage du véhicule 2355, référencée KMS sur la figure 6 et une touche de saisie du prix au kilomètre partagé 2356 référencée PKM sur la figure 6.

L'affichage 236 comprend deux lignes de seize caractères alphanumériques LCD permettant de visualiser les données introduites par le conducteur afin qu'il puisse, soit valider si aucune erreur de saisie n'a été commise, soit corriger si une erreur de saisie a été commise.

On va maintenant décrire un exemple de processus mis en oeuvre dans le cadre de l'invention en regard des figures 4 à 15 annexées.

Le processus mis en oeuvre à l'aide des systèmes FOCUS 1 et FOCUS 2 proposés dans le cadre de l'invention comprend deux étapes principales : 1) une étape de rapprochement de la demande émanant d'un piéton et de l'offre émanant d'un conducteur tout d'abord, puis 2) une étape de transport.

### 1) RAPPROCHEMENT DE LA DEMANDE ET DE L'OFFRE.

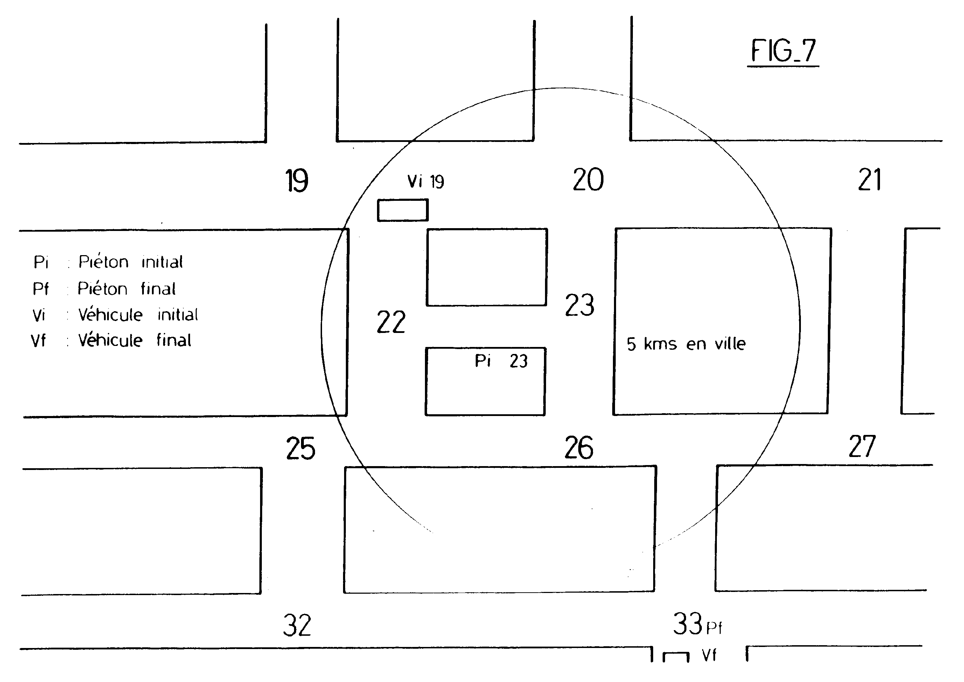

1.1.) La demande de parcours partagé.
   Pour effectuer sa demande de parcours partagé, un piéton utilise une partie du système FOCUS 1, à savoir : l'émetteur/récepteur 100 et le livret géographique 130.
   Le piéton consulte son livret géographique 130 afin de connaître le code de son lieu de destination.
   A titre d'exemple et en référence à la figure 7, on peut envisager un piéton situé au point de départ ayant comme code 23 sur le livret géographique et désirant se déplacer jusqu'au point de destination ayant comme code 33. Après identification du code de destination 33 sur le livret géographique 130, le piéton saisit sur le clavier 104 de son émetteur/récepteur 100 le nombre 33. Il appuie ensuite sur la touche de validation de l'émetteur/récepteur 100. Ce dernier émet ainsi sur une fréquence déterminée F33. Un signal sonore approprié, par exemple du type bip répétitif, est alors reçu dans tous les véhicules équipés du système FOCUS 2 et ayant sélectionné de la même façon le même code de destination, à condition que ces véhicules soient situés dans le rayon de portée de l'émetteur/récepteur 100 considéré.
1.2.) L'offre de transport partagé.
   Pour effectuer son offre de transport partagé, le conducteur utilise une partie du système FOCUS 2, à savoir : l'émetteur/récepteur 200 et le livret géographique 230.
   Le conducteur consulte son livret géographique 230 afin de connaître le code de son lieu de destination. Par exemple, en référence à la figure 7, on peut envisager le cas d'un conducteur de véhicule situé au point de départ ayant comme code 19 et désirant se déplacer jusqu'au point de destination ayant comme code 33. Le conducteur saisie au clavier 206 de son émetteur/récepteur 200 le nombre 33. Il appuie ensuite sur la touche d'attente de l'émetteur/récepteur. Ce dernier reçoit ainsi sur la fréquence codée F33 toutes les demandes de même destination. Lorsqu'un appel est effectué par un piéton, l'émetteur/récepteur 200 de FOCUS 2 délivre un signal sonore avertissant le conducteur, comme indiqué précédemment. Celui-ci actionne la touche de validation de son émetteur/récepteur et se trouve donc en communication avec le piéton demandeur. Les deux interlocuteurs peuvent dialoguer grâce aux microphones 110, 214 et convenir, si accord des deux parties, du lieu précis de rencontre.
   A titre d'exemple, au cours de cette phase, le piéton peut décliner son identité et le conducteur annoncer son numéro de plaque minéralogique, ceci pour permettre d'une part au piéton de reconnaître sans équivoque le véhicule, et d'autre part au conducteur de reconnaître le piéton lors de la présentation ultérieure de sa carte de transport.

### 2) PHASE DE TRANSPORT.

Le piéton doit indiquer au conducteur sa position afin que ce dernier vienne à sa rencontre, l'identification de la localisation du piéton étant échangée sous forme codée par l'intermédiaire du clavier 104 et du module émetteur 106.

De préférence, lorsque le véhicule a rejoint le piéton, avant que le conducteur du véhicule n'ouvre ses vitres et portières, le piéton doit montrer au conducteur, sa carte de transport 120 pour permettre au conducteur de lire l'identité du piéton afin de vérifier la concordance avec la communication radio antérieure et d'autre part, lire le code de la carte. Ces dispositions permettent au conducteur de rester en sécurité.

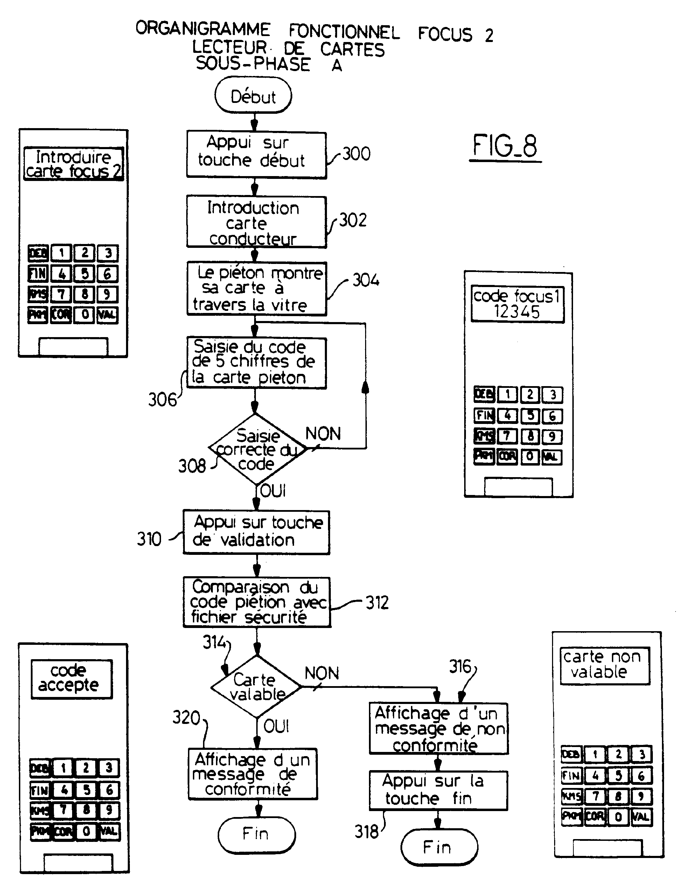

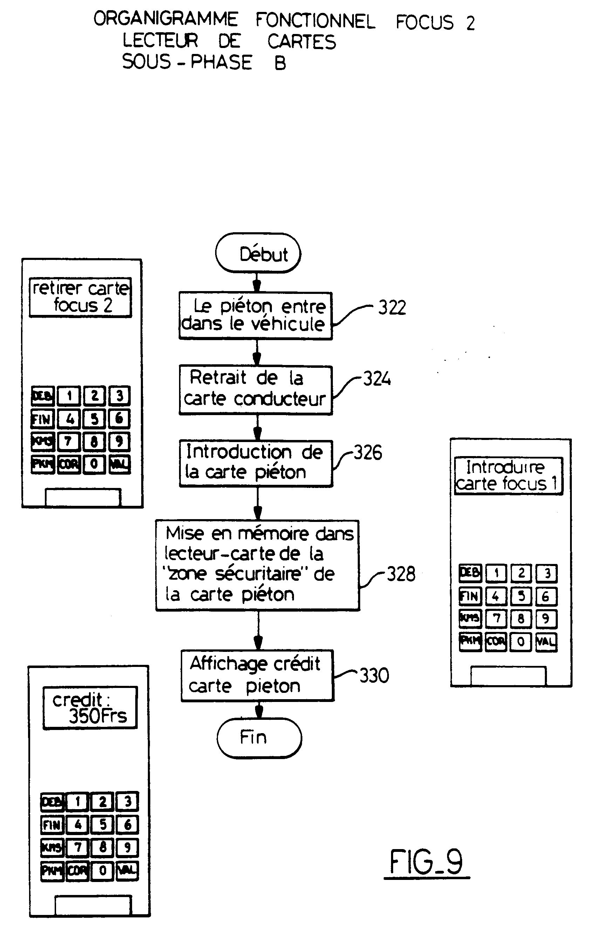

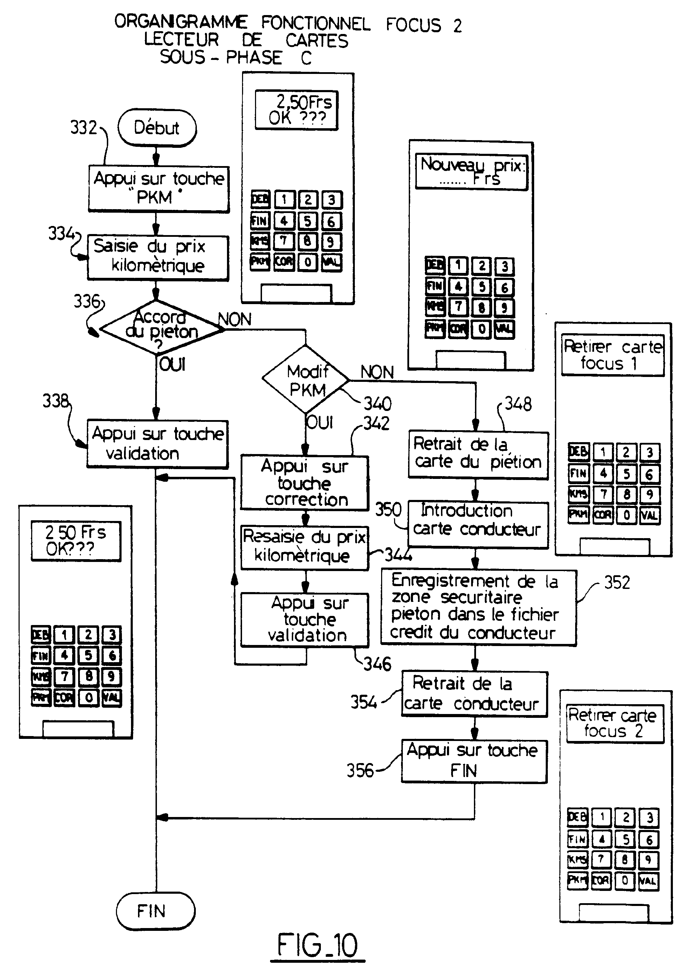

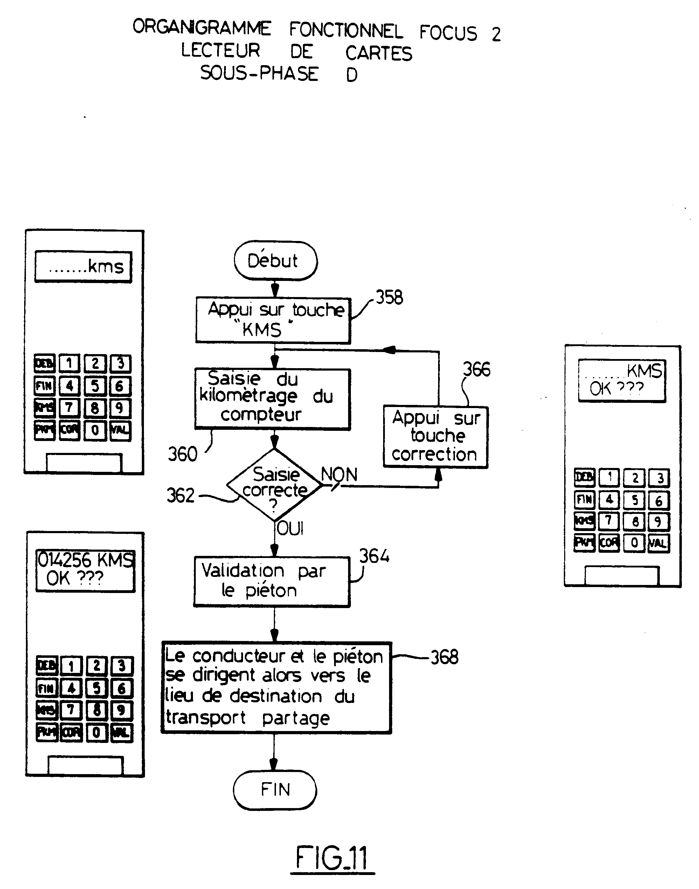

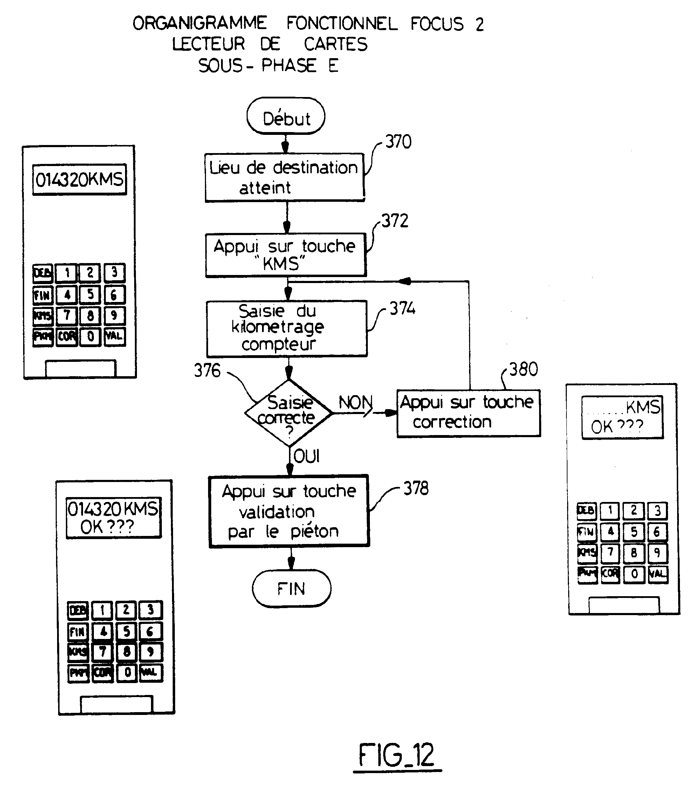

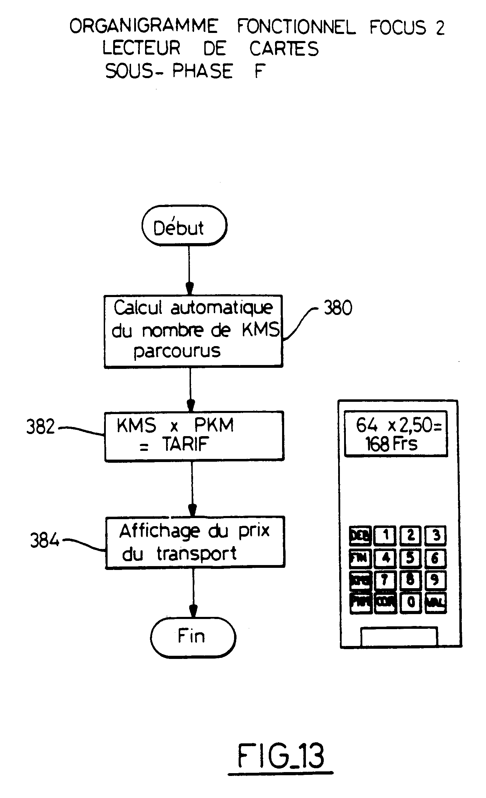

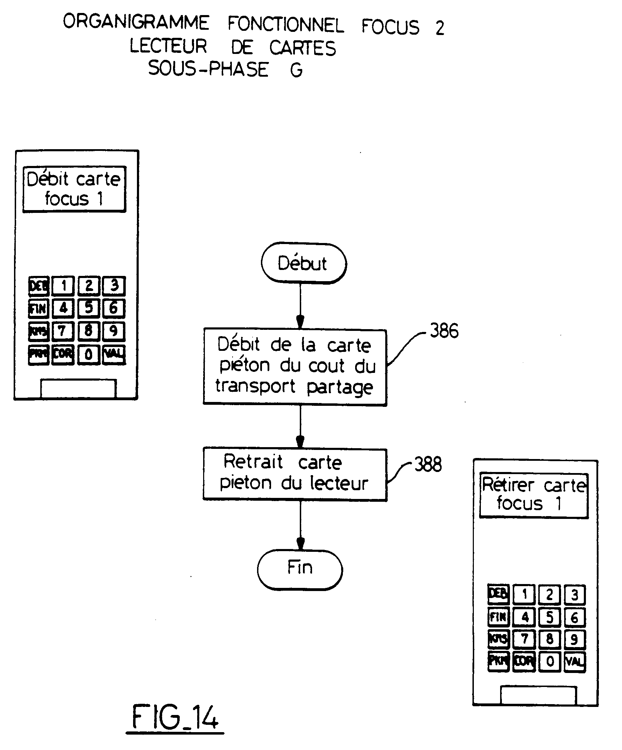

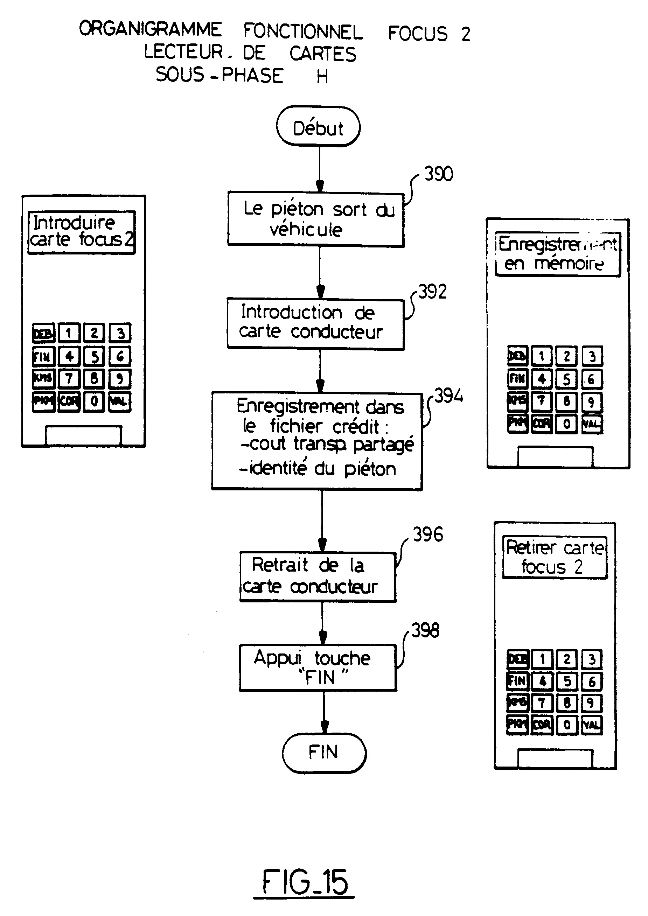

Par la suite l'étape de transport se décompose en plusieurs sous phases, de préférence huit sous phases : 1) une sous phase de reconnaissance représentée sur la figure 8, 2) une sous phase de test crédit représentée sur la figure 9, 3) une sous phase d'accord de tarif kilométrique représentée sur la figure 10, 4) une sous phase d'initialisation du kilométrage représentée sur la figure 11, 5) une sous phase de définition du kilométrage arrivée représentée sur la figure 12, 6) une sous phase de calcul du coût du transport partagé représentée sur la figure 13, 7) une sous phase de débit de la carte piéton 120 représentée sur la figure 14, et 8) une sous phase de crédit de la carte conducteur 232 représentée sur la figure 15.
2.1.) Sous phase A: reconnaissance (figure 8).
   Pour cette sous phase le conducteur utilise une autre partie du système FOCUS 2 : le lecteur de carte 234. Il appuie sur la touche début (étape 300). Il introduit sa carte 232 dans le lecteur 234 (étape 302). Le piéton ayant montré sa carte à l'étape 304 pour permettre au conducteur de lire le code, par exemple à cinq chiffres, de la carte piéton 120, le conducteur saisit ce code à l'étape 306. Le conducteur vérifie ensuite à l'étape 308 le code ainsi saisi. Si aucune erreur de saisie n'a été commise il valide par la touche de validation à l'étape 310. Sinon il appuie sur la touche de correction et saisit de nouveau le code du piéton à l'étape 306. Il valide ensuite par la touche de validation à l'étape 310.
   Ensuite, à l'étape 312, le lecteur 234 va chercher le fichier de sécurité présent sur la carte du conducteur 232 et va comparer le code du piéton avec l'ensemble des codes du fichier sécurité. S'il résulte de l'interrogation de l'étape 314 que la carte du piéton n'est pas valable, le lecteur affiche à l'étape 316 un message de non conformité. Le conducteur peut faire signe au piéton de son refus du transport partagé et met fin au processus par appui sur la touche fin à l'étape 318.
   Si au contraire la carte 120 du piéton est reconnue valable, le lecteur 234 affiche un message de conformité à l'étape 320. Le conducteur peut alors faire signe au piéton de son accord du transport partagé et inviter le piéton à entrer dans le véhicule.
2.2.) Sous phase B : test crédit (figure 9).
   Lorsque le piéton entre dans le véhicule à l'étape 322, le conducteur retire sa carte 232 du lecteur 234 à l'étape 324. Le piéton est alors invité à introduire sa carte 120 dans le lecteur 234 à l'étape 326. Le lecteur 234 peut alors enregistrer le contenu de la zone sécuritaire de la carte du piéton 120 à l'étape 328.
   Le lecteur 234 à l'étape 330 charge le fichier crédit de la carte du piéton 120 et affiche le montant du crédit disponible sur l'écran de visualisation 236 du lecteur.
2.3.) Sous phase C : Accord tarif kilométrique (figure 10).
   Le conducteur peut juger, en fonction du kilométrage prévu pour atteindre le lieu de destination, si le crédit est suffisant.
   Le conducteur appuie alors sur la touche PKM, à l'étape 332, pour indiquer au piéton le prix du kilomètre partagé. Le lecteur affiche ce prix sur l'afficheur 236. Le conducteur est maître de fixer ce prix mais il peut aussi convenir d'un prix avec le piéton, comme il peut très bien lui offrir gratuitement le transport partagé.
   Dans le premier cas, après l'étape d'appel 332 suivie de l'étape 334 de visualisation du prix kilométrique et de l'étape 336 d'interrogation du piéton, on passe à l'étape 338 au cours de laquelle le piéton ou le conducteur appuie sur la touche de validation.
   Le deuxième cas, dans lequel le piéton n'est pas d'accord sur le prix, se décompose en deux sous étapes selon que le prix peut être modifié ou non (étape 340).
   Si le prix peut être modifié, le conducteur appuie sur la touche de correction à l'étape 342 et saisit au clavier le prix du kilomètre à l'étape 344 avant d'appuyer sur la touche de validation 346. On peut prévoir que si le piéton effectue son paiement dans une autre unité monétaire, le conducteur appuie sur la touche de correction autant de fois qu'il faut pour faire apparaître sur l'écran de visualisation l'unité monétaire désiré. Le lecteur de carte 234 peut être programmé sans difficulté à cet effet par les spécialistes en la matière.
   Lorsqu'il s'avère à l'étape 340 que le prix au kilomètre ne peut être modifié, le piéton retire sa carte 120 à l'étape 348. Le conducteur introduit alors sa carte à l'étape 350 de sorte que le lecteur 234 procède à l'étape 352 à l'enregistrement de la zone sécuritaire de la carte piéton 130 dans le fichier crédit de la carte 232 du conducteur. Ensuite, le conducteur retire sa carte à l'étape 354 et appuie sur la touche fin à l'étape 356.
2.4.) Sous phase D : kilométrage départ (figure 11).
   Si le montant du crédit dans la carte piéton 120 est suffisant, la phase suivante peut être abordée.
   Le conducteur appuie alors sur la touche KMS à l'étape 358 et il saisit au clavier numérique le kilométrage actuel de son véhicule à l'étape 360.
   Si aucune erreur de saisie n'est dépistée à l'étape 362, le piéton valide par la touche de validation à l'étape 364. Sinon le conducteur appuie sur la touche de correction à l'étape 366 et saisit de nouveau le kilométrage de son véhicule à l'étape 360. Le piéton valide ensuite par la touche de validation l'étape 364. Le parcours partagé peut alors commencer à l'étape 368.
2.5.) Sous phase E : kilométrage arrivée (figure 12).
   Quand le lieu de destination est atteint à l'étape 370, le conducteur appuie sur la touche KMS à l'étape 372 et saisit au clavier numérique le kilométrage actuel de son véhicule à l'étape 374. Si aucune erreur de saisie n'est détectée à l'étape 376, le piéton valide par la touche de validation 378. Sinon le conducteur appuie sur la touche de correction à l'étape 380 et saisit de nouveau le kilométrage de son véhicule à l'étape 374. Le piéton valide ensuite par la touche de validation à l'étape 378.
2.6.) Sous phase F : coût du transport partagé (figure 13).
   A l'étape 380, le lecteur 234 calcule le nombre de kilomètres parcouru. Il affiche de préférence ce résultat. Le lecteur effectue ensuite à l'étape 382 le calcul du prix du transport partagé et affiche ce prix à l'étape 384.
2.7.) Sous phase G : débit carte piéton (figure 14).
   Pour permettre d'accéder au fichier débit de la carte du piéton le conducteur appuie sur la touche de validation à l'étape 386. La carte 120 du piéton est alors débitée du montant du transport. Le piéton peut alors retirer sa carte du lecteur et sortir du véhicule à l'étape 388.
2.8.) Sous phase H : crédit carte conducteur (figure 15).
   La sortie du piéton est illustré schématiquement sous la référence 390 sur la figure 15. Le conducteur peut alors introduire sa carte à l'étape 392 et appuyer sur la touche de validation. Le lecteur va charger dans le fichier de crédit l'identité du piéton et le montant du transport partagé à l'étape 394.

Le conducteur peut ensuite retirer sa carte à l'étape 396 et appuyer sur la touche fin à l'étape 398. Le lecteur 234 peut être programmé sans difficulté par les spécialistes de sorte que dans le cas où le conducteur aurait appuyé sur la touche fin avant d'avoir introduit sa carte, le lecteur lui adresse un message pour lui rappeler qu'il doit introduire sa carte pour finaliser l'opération.

Le système précédemment décrit permet un rapprochement permanent, in situ, des demandes et des offres ponctuelles de parcours financièrement partagés, susceptibles de se manifester inopinément en n'importe quel point sur toutes voies de circulation automobile.

Il permet en particulier un partage permanent des distances habituellement parcourues par une multitude de personnes seules dans leur véhicule. L'invention s'applique à tout type de véhicule, mais tout particulièrement aux véhicules privés.

L'invention permet un rapprochement immédiat des demandes et des offres. Elle permet en outre d'assurer une sécurité totale tant des piétons transportés que des conducteurs transporteurs, d'une part grâce à l'identification des uns et des autres et à la mémorisation de ces identifications, d'autre part grâce au paiement électronique proposé qui évite tant aux piétons transportés qu'aux conducteurs transporteurs de porter sur soi de l'argent liquide.

Les cartes 120, 232 peuvent être vendues dans des distributeurs automatiques ou des revendeurs agréés. Elles peuvent être munies ou non de codes devant être vérifiés avant leur utilisation.

Bien entendu la présente invention n'est pas limitée aux modes de réalisation particuliers qui viennent d'être décrits mais s'étend à toutes variantes conformes à son esprit.

Les moyens d'affichage 112, 216 prévus sur les moyens émetteurs/récepteurs 100, 200 peuvent être prévus pour afficher la destination demandée par le piéton et/ou la localisation du piéton et/ou du véhicule, ainsi que le cas échéant, l'identité du piéton et du véhicule.

Les moyens d'affichage 112, 216 peuvent être formés d'un écran de visualisation extra plat, léger et pliable, par exemple à base de technologie LCD.

Dans l'exemple qui précède, la donnée liée aux trajets souhaités par les piétons, est définie à l'aide du livret géographique et constituée par la destination souhaitée. Le cas échéant, comme indiqué précédemment, la donnée liée aux trajets souhaités véhiculée par le signal de demande peut correspondre seulement à la direction de déplacement souhaité par le piéton.

Le lecteur 234 peut être conçu pour reconnaître et convertir différentes unités monétaires, afficher leur taux de conversion, mémoriser et admettre une modification digitale des taux mémorisés.

Le lecteur 234 peut être programmé pour afficher en continu la distance restant disponible pour le passager et émettre un signal anticipé d'épuisement du solde disponible. Pour cela, le lecteur 234 doit être couplé à un odomètre mesurant la distance parcourue par le véhicule. De même, le lecteur 234 peut être programmé pour afficher en continu la valeur du parcours au fur et à mesure de son déroulement.

Le système peut être conçu pour admettre plus d'un passager avec ou sans partage financier des distances parcourues conjointement.

Le conducteur peut obtenir le paiement de la valeur contenue dans la mémoire crédit de sa carte 232 auprès des organismes centralisateurs délivrant ces cartes. De préférence, le lecteur 234 est conçu pour signaler la limite de charge de cet emplacement mémoire, avant surcharge, en vue de son remplacement par le conducteur.

Pour renforcer la sécurité du conducteur, on peut prévoir un lecteur de cartes auxiliaire à l'extérieur du véhicule, par exemple au niveau d'un rétroviseur, pour permettre au conducteur de vérifier l'identité du piéton et la validité de sa carte 120, avant d'autoriser le piéton à pénétrer dans le véhicule.

Le cas échéant, les données d'identification pour la sécurité et de paiement peuvent être prévues sur deux cartes séparées.

Les cartes 120, 232 peuvent être aisément adaptées pour servir à la fois à un piéton et à un conducteur de véhicules.

Le lecteur de cartes 234 peut également être programmé pour interrompre le débit de la carte 120 après parcours d'une distance X prédéterminée.

Le livret géographique 230 peut le cas échéant être remplacé par un système radiogoniométrique. Un radiocompas permet alors de connaître l'axe entre le véhicule et le piéton. Un système de mesure de distance couplé au radiocompas permet alors de connaître la distance qui sépare le véhicule du piéton. Le conducteur reçoit ainsi les informations issues de l'équipement du piéton, soit visuellement sur un écran à l'intérieur du véhicule, soit par un signal sonore indiquant l'angle entre l'axe de déplacement du véhicule et la position du piéton ainsi que la distance les séparant.

Le système FOCUS 2 peut être équipé d'un système de lecture optique pour lire le code de la carte piéton 120.

L'invention s'applique de façon non limitative aux véhicules privés.

Bien entendu la présente invention peut faire l'objet de nombreuses variantes de réalisation.

En ce qui concerne les cartes géographiques de parcours utilisés, on peut par exemple prévoir les dispositions suivantes.

Chaque émetteur-récepteur est doté d'une mémoire chargeable à partir de cartes géographiques à microcalculateur.

Ces cartes géographiques contiennent un quadrillage d'itinéraires codés de villes ou de régions ; elles fournissent à l'émetteur-récepteur, auquel elles sont associés, les fréquences d'émission correspondant aux itinéraires recherchés, ainsi que la localisation du piéton (accessoirement de l'automobile).

L'émetteur-récepteur transpose en fréquences d'émission-réception les numéros de code des destinations, affichées par chacun des protagonistes dans la fenêtre de lecture de leur émetteur-récepteur.

Si l'utilisateur connaît la désignation de son point de destination sans en connaître le code, il l'appelle par le clavier de son émetteur-récepteur dans la fenêtre de lecture et la valide. Sinon le piéton consulte un livret géographique associé afin de connaître le nom ou le code de son lieu de destination, comme celui de sa propre proposition.

Les cartes géographiques de trajets numérisés peuvent être réparties par régions et/ou grandes agglomérations.

La location du piéton et donc l'efficacité du rapprochement sont optimisées par la finesse du quadrillage géographique, lequel peut être concrétisé à vue par des bornes-bâton localisant le piéton par le numéro de la borne.

Corrélativement cette finesse accroît le potentiel de parcours partageables.

En ce qui concerne la localisation du piéton, on peut prévoir les dispositions suivantes.

On a prévu précédemment qu'au signal sonore de l'appel d'un piéton, que l'émetteur-récepteur de FOCUS 2 délivre au conducteur, celui-ci appuie sur la touche de validation de son émetteur-récepteur et se trouve donc en communication avec le piéton demandeur. Les deux interlocuteurs dialoguent et conviennent, si accord des deux parties, du point de rencontre. Le piéton décline son identité numérique, le conducteur annonce le contenu de sa plaque minéralogique, ceci permettant d'une part au piéton de reconnaître sans équivoque le véhicule et d'autre part, au conducteur de reconnaître le piéton lors de la présentation ultérieure de sa carte d'identification.

La localisation du piéton peut être ainsi réalisée par dialogue radio mais cette localisation peut s'avérer négative pour le véhicule placé en aval du piéton. S'ensuit une inutile dispersion des offres comme des demandes.

Pour pallier cette dispersion le conducteur se calera successivement sur une fréquence codée à l'aval soit 33.23, le conducteur sachant que 23 est à l'aval de sa propre position. Il captera ainsi tout piéton aval émettant sur la même fréquence composée de sa destination 33 et de sa position de piéton.

Le conducteur, pour atteindre plus sûrement l'aval, prendra une garde en aval.

Exemple : Un conducteur en position 21 vers 23 se calant sur f33.23 éliminera les piétons en position 22 ainsi que, momentanément, les piétons en aval de la position 23. Ce qui ne saurait empêcher ce conducteur de se caler ensuite et successivement sur f33.24, f33.25, etc ... éliminant de la sorte la dispersion des demandes et optimisant l'efficacité du rapprochement par ailleurs lié à la finesse du quadrillage géographique.

## Revendications

1. Système de communication entre piétons et véhicules, destiné à mettre en relation d'une part des piétons désirant se rendre en un lieu donné, d'autre part des véhicules susceptibles d'acccueillir ces piétons pour les transporter au lieu donné, caractérisé par le fait qu'il comprend :
- des moyens émetteurs/récepteurs portatifs (100), portés par les piétons, conçus pour générer des signaux de demande codés dont le code est représentatif de données liées aux trajets souhaités par les piétons et comprenant d'une part l'identification de la destination souhaitée par les piétons et d'autre part l'identification de la localisation des piétons émettant les signaux de demande et détecter automatiquement un signal d'offre éventuelle de prise en charge émanant d'un véhicule, et
- des moyens émetteurs/récepteurs (200) embarqués sur véhicules, conçus pour détecter les signaux de demande générés par des moyens émetteurs/récepteurs portatifs (100), dont le code coïncide avec un code spécifique lié au trajet de chaque véhicule, et générer un signal d'offre de prise en charge en cas de coïncidence entre un code reçu en provenance d'un moyen émetteur/récepteur portatif et ledit code spécifique lié au trajet du véhicule.

2. Système de communication selon la revendication 1, caractérisé par le fait que lesdites données liées aux trajets souhaités par les piétons comprennent la définition du parcours souhaité.

3. Système de communication selon l'une des revendications 1 ou 2, caractérisé par le fait que lesdites données liées aux trajets souhaités par les piétons comprennent l'identification de la direction souhaitée.

4. Système de communication selon l'une des revendications 1 à 3, caractérisé par le fait que les moyens émetteurs/récepteurs portatifs (100) et les moyens émetteurs/récepteurs embarqués (200), sont conçus pour permettre un dialogue entre les piétons émettant les signaux de demande et les conducteurs des véhicules émettant les signaux d'offre.

5. Système de communication selon l'une des revendications 1 à 4, caractérisé par le fait qu'il comprend des moyens d'identification des piétons.

6. Système de communication selon l'une des revendications 1 à 5, caractérisé par le fait qu'il comprend des moyens d'identification des véhicules et/ou de leurs conducteurs.

7. Système de communication selon l'une des revendications 1 à 6, caractérisé par le fait qu'il comprend des moyens de paiement électronique (120).

8. Système de communication selon la revendication 7, caractérisé par le fait que les moyens de paiement électronique comprennent un support à mémoire (120) détenu par les piétons, et un moyen de lecture (234) du support à mémoire, embarqué sur les véhicules.

9. Système de communication selon la revendication 8, caractérisé par le fait que le support à mémoire (120) comprend une carte à microcalculateur.

10. Système de communication selon l'une des revendications 1 à 9, caractérisé par le fait qu'il comprend un livret géographique (130, 230) de régions ou agglomérations divisées en zones identifiées par des codes prédéterminées.

11. Système de communication selon l'une des revendications 1 à 10, caractérisé par le fait qu'il comprend :
- un premier sous-ensemble portatif (FOCUS 1) à la disposition des piétons, qui comporte :
. lesdits moyens émetteurs/récepteurs (100),
. une carte à microcalculateur (120), et
. un livret géographique (130), et
- un second sous-ensemble portatif (FOCUS 2) embarqué sur les véhicules, qui comporte :
. lesdits moyens émetteurs/récepteurs (200),
. une carte à microcalculateur (232),
. un livret géographique (230), et
. un lecteur de carte (234).

12. Système de communication selon la revendication 11, caractérisé par le fait que les livrets géographiques (130, 230) comportent des cartes géographiques munies de codes et que les moyens émetteurs/récepteurs (100, 200) sont pourvus de claviers (104, 206) permettant l'introduction d'un code choisi.

13. Système de communication selon l'une des revendications 1 à 12, caractérisé par le fait qu'il comprend des supports à mémoire (120, 230) détenus par les piétons et les conducteurs de véhicule, qui contiennent des données d'identification de leur propriétaire et sont conçues pour mémoriser les données d'identification communiquées par l'autre partie, à savoir un conducteur de véhicule et un piéton respectivement.

14. Système de communication selon l'une des revendications 1 à 13, caractérisé par le fait que les moyens émetteurs/récepteurs (100, 200) sont munis de moyens d'affichage (112, 216).

15. Système de communication selon l'une des revendications 1 à 14, caractérisé par le fait que les moyens embarqués sur véhicule comprennent un odomètre.

16. Système de communication selon l'une des revendications 1 à 15, caractérisé par le fait que les moyens embarqués sur véhicule comprennent des moyens aptes à calculer le coût du transport en multipliant la distance parcourue par un prix de base.

17. Système de communication selon la revendication 16, caractérisé par le fait que les moyens de calcul son conçus pour débiter un support à mémoire (120) détenu par le piéton et créditer un support à mémoire (230) détenu par un conducteur de véhicule.

18. Système de communication selon l'une des revendications 1 à 17, caractérisé par le fait que les moyens embarqués sur véhicule comprennent un moyen de lecture de support à mémoire placé à l'extérieur du véhicule.

19. Système de communication selon l'une des revendications 1 à 18, caractérisé par le fait que les moyens embarqués sur véhicule comprennent un système radiogoniométrique.

## Claims

1. System for communication between pedestrians and vehicles, intended to make contact between, on the one hand, pedestrians wishing to go to a given place, and, on the other hand, vehicles capable of accommodating these pedestrians in order to transport them to the given place, characterized in that it comprises:
- portable transmitter/receiver means (100) carried by the pedestrians, designed to generate coded request signals whose code is representative of data relating to the trips wanted by the pedestrians and comprising, on the one hand the identification of the destination wanted by the pedestrians and, on the other hand, the identification of the location of the pedestrians transmitting the request signals, and to automatically detect a possible pick up offer signal emanating from a vehicle, and
- transmitter/receiver means (200) installed in vehicles, designed to detect the request signals generated by portable transmitter/receiver means (100) whose code coincides with a specific code relating to the trip by each vehicle, and to generate a pick up offer signal in the event of coincidence between a code received originating from a portable transmitter/receiver means and the said specific code relating to the trip by the vehicle.

2. Communication system according to Claim 1, characterized in that the said data relating to the trips wanted by the pedestrians comprise the definition of the route wanted.

3. Communication system according to one of Claims 1 or 2, characterized in that the said data relating to the trips wanted by the pedestrians comprise the identification of the direction wanted.

4. Communication system according to one of Claims 1 to 3, characterized in that the portable transmitter/receiver means (100) and the installed transmitter/receiver means (200), are designed to permit a dialogue between the pedestrians transmitting the request signals and the drivers of the vehicles transmitting the offer signals.

5. Communication system according to one of Claims 1 to 4, characterized in that it comprises means of identification of the pedestrians.

6. Communication system according to one of Claims 1 to 5, characterized in that it comprises means of identification of the vehicles and/or of their drivers.

7. Communication system according to one of Claims 1 to 6, characterized in that it comprises electronic payment means (120).

8. Communication system according to Claim 7, characterized in that the electronic payment means comprise a memory medium (120) held by the pedestrians, and a reading means (234) for the memory medium, installed in the vehicles.

9. Communication system according to Claim 8, characterized in that the memory medium (120) comprises a microcomputer card.

10. Communication system according to one of Claims 1 to 9, characterized in that it comprises a geographical booklet (130, 230) for regions or built-up areas divided into zones identified by predetermined codes.

11. Communication system according to one of Claims 1 to 10, characterized in that it comprises:
- a first portable sub-assembly (FOCUS 1) available to the pedestrians, which comprises:
. the said transmitter/receiver means (100),
. a microcomputer card (120), and
. a geographical booklet (130), and
- a second portable sub-assembly (FOCUS 2) installed in the vehicles, which comprises:
. the said transmitter/receiver means (200),
. a microcomputer card (232),
. a geographical booklet (230), and
. a card reader (234).

12. Communication system according to Claim 11, characterized in that the geographical booklets (130, 230) comprise geographical maps complete with codes and that the transmitter/receiver means (100, 200) are provided with keyboards (104, 206) permitting insertion of a chosen code.

13. Communication system according to one of Claims 1 to 12, characterized in that it comprises memory media (120, 230) held by the pedestrians and the vehicle drivers, which contain identification data about their owner and are designed to memorize the identification data communicated by the other party, namely a vehicle driver and a pedestrian respectively.

14. Communication system according to one of Claims 1 to 13, characterized in that the transmitter/receiver means (100, 200) are equipped with display means (112, 216).

15. Communication system according to one of Claims 1 to 14, characterized in that the in-vehicle installed means comprise an odometer

16. Communication system according to one of Claims 1 to 15, characterized in that the in-vehicle installed means comprise means able to calculate the cost of the transport by multiplying the distance covered by a basic price.

17. Communication system according to Claim 16, characterized in that the calculating means are designed to debit a memory medium (120) held by the pedestrian and credit a memory medium (230) held by a vehicle driver.

18. Communication system according to one of Claims 1 to 17, characterized in that the in-vehicle installed means comprise a memory medium reading means placed outside the vehicle.

19. Communication system according to one of Claims 1 to 18, characterized in that the in-vehicle installed means comprise a radiogoniometric system.

## Patentansprüche

1. System zur Kommunikation zwischen Fußgängern und Fahrzeugen, dazu bestimmt, einerseits Fußgänger, die sich an einen bestimmten Ort begeben möchten, andererseits Fahrzeuge, die imstande sind, diese Fußgänger aufzunehmen, um sie an den gegebenen Ort zu transportieren, miteinander in Beziehung zu setzen, dadurch gekennzeichnet, daß es aufweist:
- tragbare Sender/Empfängereinrichtungen (100), die von den Fußgängern getragen werden, dazu gedacht, codierte Anfragesignale zu erzeugen, deren Code repräsentativ für Daten ist, die mit den von den Fußgängern gewünschten Strecken verbunden sind und die einerseits die Identifizierung des von den Fußgängern gewünschten Ziels und andererseits die Identifizierung des Standortes der Fußgänger, die die Anfragesignale aussenden, und automatisch ein Anbietesignal für das eventuelle Übernehmen, das von einem Fahrzeug ausgeht, zu erfassen; und
- in Fahrzeugen untergebrachte Sender/Empfängereinrichtungen (200), dazu gedacht, die Anfragesignale zu erfassen, die von den tragbaren Sender/Empfängereinrichtungen (100) erzeugt worden sind, deren Code mit einem spezifischen Code übereinstimmt, der mit der Strecke jedes Fahrzeuges verbunden ist, und ein Anbietesignal für die Übernahme in dem Fall der Übereinstimmung zwischen einem Code, der von einer tragbaren Sender/Empfängereinrichtung herrührend empfangen worden ist, und dem spezifischen Code, der mit der Strecke des Fahrzeuges verbunden ist, zu erzeugen.

2. Kommunikationssystem nach Anspruch 1, dadurch gekennzeichnet, daß die mit der von den Fußgängern gewünschten Strecke verbundenen Daten die Definition des gewünschten Verlaufes aufweisen.

3. Kommunikationssystem nach einem der Ansprüche 1 oder 2, dadurch gekennzeichnet, daß die mit der von den Fußgängern gewünschten Strecke verbundenen Daten die Identifizierung der gewünschten Richtung aufweisen.

4. Kommunikationssystem nach einem der Ansprüche 1 bis 3, dadurch gekennzeichnet, daß die tragbaren Sender/Empfängereinrichtungen (100) und die untergebrachten Sender/Empfängereinrichtungen (200) dazu gedacht sind, einen Dialog zwischen den Fußgängern, die die Anfragesignale aussenden, und den Fahrzeugführern, die die Anbietesignale aussenden, zu erlauben.

5. Kommunikationssystem nach einem der Ansprüche 1 bis 4, dadurch gekennzeichnet, daß es Mittel zur Identifizierung der Fußgänger aufweist.

6. Kommunikationssystem nach einem der Ansprüche 1 bis 5, dadurch gekennzeichnet, daß es Mittel zur Identifizierung der Fahrzeuge und/oder ihrer Führer aufweist.

7. Kommunikationssystem nach einem der Ansprüche 1 bis 6, dadurch gekennzeichnet, daß es Mittel (120) für die elektronische Zahlung aufweist.

8. Kommunikationssystem nach Anspruch 7, dadurch gekennzeichnet, daß die Mittel für die elektronische Zahlung einen Speicherträger (120), den die Fußgänger besitzen, und eine Leseeinrichtung (234) für den Speicherträger, der in den Fahrzeugen untergebracht ist, aufweisen.

9. Kommunikationssystem nach Anspruch 8, dadurch gekennzeichnet, daß der Speicherträger (120) eine Mikrorechnerkarte aufweist.

10. Kommunikationssystem nach einem der Ansprüche 1 bis 9, dadurch gekennzeichnet, daß es einen geographischen Katalog (130, 230) der Regionen oder Ortschaften aufweist, aufgeteilt in Zonen, die durch vorbestimmte Codes identifiziert sind.

11. Kommunikationssystem nach einem der Ansprüche 1 bis 10, dadurch gekennzeichnet, daß es aufweist:
- eine erste tragbare Unteranordnung (FOCUS 1) zur Verfügung durch die Fußgänger, die umfaßt:
. die Sender/Empfängereinrichtungen (100),
. eine Mikrorechnerkarte (120) und
. einen geographischen Katalog (130), und
- eine zweite tragbare Unteranordnung (FOCUS 2), die in den Fahrzeugen untergebracht ist, die umfaßt:
. die Sender/Empfängereinrichtungen (200),
. eine Mikrorechnerkarte (232),
. einen geographischen Katalog (230) und
. einen Kartenleser (234).

12. Kommunikationssystem nach Anspruch 11, dadurch gekennzeichnet, daß die geographischen Kataloge (130, 230) geographische Karten, die mit Codes versehen sind, umfassen und daß die Sender/Empfängereinrichtungen (100, 200) mit Tastaturen (104, 206) versehen sind, die das Eingeben eines gewählten Codes erlauben.

13. Kommunikationssystem nach einem der Ansprüche 1 bis 12, dadurch gekennzeichnet, daß es Speicherträger (120, 230) aufweist, die von den Fußgängern und den Fahrzeugführern mit sich geführt werden, die Daten zur Identifikation ihrer Eigentümer enthalten und dazu gedacht sind, die von der anderen Partei übermittelten Identifikationsdaten abzuspeichern, nämlich die eines Fahrzeugführers und eines jeweiligen Fußgängers.

14. Kommunikationssystem nach einem der Ansprüche 1 bis 13, dadurch gekennzeichnet, daß die Sender/Empfängereinrichtungen (100, 200) mit Anzeigeeinrichtungen (112, 216) versehen sind.

15. Kommunikationssystem nach einem der Ansprüche 1 bis 14, dadurch gekennzeichnet, daß die im Fahrzeug untergebrachten Einrichtungen einen Wegstreckenmesser aufweisen.

16. Kommunikationssystem nach einem der Ansprüche 1 bis 15, dadurch gekennzeichnet, daß die im Fahrzeug untergebrachten Einrichtungen Mittel aufweisen, die in der Lage sind, die Kosten des Transports zu berechnen, indem die durchfahrene Entfernung mit einem Basispreis multipliziert wird.

17. Kommunikationssystem nach Anspruch 16, dadurch gekennzeichnet, daß die Rechenmittel dazu gedacht sind, einen Speicherträger (120), den ein Fußgänger besitzt, zu belasten, und einem Speicherträger (230), den ein Fahrzeugführer besitzt, gutzuschreiben.

18. Kommunikationssystem nach einem der ansprüche 1 bis 17, dadurch gekennzeichnet, daß die im Fahrzeug untergebrachten Einrichtungen eine Leseeinrichtung für den außerhalb des Fahrzeuges befindlichen Speicherträger aufweisen.

19. Kommunikationssystem nach einem der Ansprüche 1 bis 18, dadurch gekennzeichnet, daß die im Fahrzeug untergebrachten Einrichtungen ein radiogoniometrisches System aufweisen.
